(19) Europäisches Patentamt / European Patent Office / Office européen des brevets

(11) **EP 2 830 135 A1**

(12) **EUROPEAN PATENT APPLICATION**

(43) Date of publication:
**28.01.2015 Bulletin 2015/05**

(21) Application number: **13178176.7**

(22) Date of filing: **26.07.2013**

(51) Int Cl.:
*H01M 8/06* (2006.01)     *C01B 3/08* (2006.01)
*B01J 23/28* (2006.01)     *B01J 23/34* (2006.01)
*B01J 23/745* (2006.01)    *B01J 23/75* (2006.01)
*B01J 23/755* (2006.01)    *B01J 27/20* (2006.01)
*B01J 27/24* (2006.01)     *B01J 35/04* (2006.01)
*B01J 35/06* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **NIM Energy
Toronto, Ontario M9L 0A3 (CA)**

(72) Inventor: **Fertman, Mark
Toronto, Ontario M2N IPS (CA)**

(74) Representative: **Meissner, Bolte & Partner GbR
Widenmayerstrasse 47
80538 München (DE)**

(54) **Catalyzer body and hydrogen generator device**

(57)     Catalyzer body for use in a hydrogen generator device, the catalyzer body comprising a mesh-type or perforated sheet-type supporting structure at least partly provided with a large surface area coating with catalytic activity towards hydrogen evolution reaction.

Fig. 1

EP 2 830 135 A1

**Description**

The present invention relates to a catalyzer body for use in a hydrogen generator device and to a hydrogen generator device in which an alkaline or saline aqueous solution is used as hydrogen source.

The chemical processes taking place in such generator devices are as follows:

On a hydrogen developing body (anode), magnesium is dissolved according to the equation

$$2Mg = 2Mg2+ \; + 4e\text{-}.$$

On a catalyzer body (cathode), oxygen is consumed according to the equation

O2 + 2H2O + 4e- = 40H-.

Summarizing, this can be described in a simplified manner as follows:

2Mg + O2 + 2H2O = 2Mg(OH)2.

A hydrogen developing material can be, for example, magnesium, zinc, a mixture of these elements and alloys thereof. Catalyst materials can e.g. be platinum or non-noble metals like iron, cobalt, nickel or - less familiar - molybdenum, manganese, or similar metals, as well as alloys and selected compounds thereof.

US 4,822,698 discloses an energy cell/battery for use in seawater. This battery works according to the aforementioned electrochemical reactions, with magnesium or zinc being used as anode material and an oxygen electrode as cathode. The oxygen supplied to the cathode is dissolved in the seawater. This seawater battery consists of a cylindrical oxygen electrode cathode. The structure comprises single or several anode rods, which contain magnesium or zinc. The oxygen electrode is similar to those used in many ways in other batteries, e.g. in US 6,372,371 B1.

US 5,405,717 discloses a seawater cell, the power of which is slightly increased as compared to that of US 4,822,698. This power increase is caused by the effect of waves, which increases the flow of the seawater through the cathode so as to supply oxygen. The cell structure includes water flow conducting means, which make the water flow through the cell. US 5,225,291 discloses a seawater battery, which is operable with or without dissolved oxygen due to the use of a hybrid cathode. US 5,427,871 relates to galvanic seawater cells and batteries, respectively, which use oxygen dissolved in the seawater as oxidizing agent.

Another galvanic type of seawater batteries, in which normally seawater is used as an electrolyte, comprises a magnesium anode and a cathode of copper chloride or silver chloride. These long-term batteries do not need oxygen dissolved in seawater, but they have a small output energy density, are generally heavy and require much space. A Mg/CuCl battery with a watt-year as output energy may have a length of 8 ½ feet, a diameter of 9 inches and a weight of approximately 100 pounds. Moreover, these batteries have a limited flexibility with respect to the design and are restricted to a longitudinal shape. Examples are described in US 4,601,961, US 5,288,564, or US 6,656,628 B2.

Metal-air cells are known primary cells, comprising an anode made of metal, e.g. of aluminum, magnesium or zinc, and an air cathode, which is disposed with a small spacing from the metallic anode, but does not touch the same. A suited electrolyte is provided in a space between the cathode and anode. The anode is immersed into the electrolyte. Different embodiments of such batteries and methods for the production and use of such batteries are known from the prior art, compare, for example, US 5,004,654, US 5,360,680, US 5,376,471, US 5,415,949, US 5,316,632. Typical metal-air batteries and metal-air fuel cells, respectively, are described, for example, in US 6,127,061.

Besides their use in the above-referenced electrical energy generators, magnesium or electrochemically related metals and their alloys, placed in aqueous solutions, have been used to generate hydrogen, which is being considered as an important energy source of the future, in non-galvanic devices.

Basic concepts in this regard have been disclosed e.g. in US 3,256,504; US 3,892,653 or US 4,436,793 and further developed e.g. in US 2008/0268306. All of these prior art documents disclose hydrogen generators containing alternating plates of magnesium or an electrochemically comparable material and plates of an electrochemically passive material in an electrolyte, for example a saline solution. A second route in the development of hydrogen generator devices is related to the use of powdery or granular magnesium in an electrolyte, wherein smaller particles of a catalyst like iron or nickel or similar are embedded into the surface of the magnesium particles. Such devices are disclosed in e.g. US 4,017,414; US 4,264,362; JP 2003/221201 and US 2004/0018145. In some of those documents, the use of sintered bodies made from magnesium or similar powders or granules, respectively, as hydrogen developing bodies is disclosed.

Based on the above-described prior art it is an object of the present invention to provide an improved, cheap, and highly efficient catalyzer body and hydrogen generator device.

This and other objects are solved by a catalyzer body according to claim 1 and by a hydrogen generator device according to claim 6. Likewise, a process for producing hydrogen and a combined device for producing hydrogen and steam are described herein, although not specifically claimed.

A catalyzer body according to the invention comprises a mesh-type or perforated sheet-type supporting structure at least partly provided with a large surface area coating with catalytic activity towards hydrogen evolution reaction.

In an embodiment, the support structure comprises a metal mesh or perforated metal sheet, preferably made from steel or copper, or a plastic mesh or perforated plastic sheet made from a polymer material, the mesh, or sheet, respectively, comprising a thickness between 20 $\mu$m and 2 mm, preferably between 100 $\mu$m and 1 mm and more preferably between 200 $\mu$m and 750 $\mu$m, and a mesh or perforation size respectively, between 200 $\mu$m and 20 mm, preferably between 500 $\mu$m and 10 mm and more preferably between 1 and 5 mm. For specific applications and in device configurations of unusual dimensions, the thickness of the mesh or sheet, respectively, and the mesh or perforation size, respectively, can be outside of the ranges specified hereabove, without departing from the scope of the invention.

In further embodiments, the coating comprises at least one of nickel, cobalt, molybdenum, manganese and iron and/or alloy or a nitride or sulphide thereof or carbon, preferably in a ceramic or polymeric binder/adhesive matrix. Besides the above-mentioned non-noble passive metals other metals and alloys or compounds thereof can be used which are known to have a similar effect in a hydrogen generating reaction. Besides a ceramic or polymeric binder/adhesive matrix, other types of coatings binding the respective metals to the supporting structure can be used e.g. a glass-type or cementitious matrix.

In a further embodiment, the coating comprises a nano- or microporous surface having a surface roughness in the range between 200 nm and 1 mm, preferably between 500 nm and 200 $\mu$m and more preferably between 2 and 5 $\mu$m. The nano- or microporous surface provides for a large surface area and correspondingly large area interface with the hydrogen source liquid and for the ionic interactions with an opposing hydrogen-developing surface in a hydrogen generator device.

According to further embodiments of the invention, the catalyzer body comprises an overall flat, cylindrical or spiral plate shape. Bodies of such overall shape are both easy to manufacture and to handle in assembling a hydrogen generator device. However, in principle, other overall geometrical configurations, such as semicircular or wave-shaped configurations, are within the scope of the invention, too.

According to a second aspect of the invention, a hydrogen generator device comprises, in a vessel having a gas outlet, at least one hydrogen-developing body which is made from or at least comprises portions made from magnesium, zinc or aluminum or an alloy thereof, preferably a plurality of such hydrogen-developing bodies, a catalyzer body of one of the preceding claims, and an alkaline or saline aqueous electrolyte, serving as hydrogen source.

In an embodiment of such hydrogen generator device, a first plurality of plate-shaped or cylindrical hydrogen-developing bodies and a second plurality of correspondingly plate-shaped or cylindrical catalyzer bodies is arranged in the vessel in an alternating configuration of hydrogen-developing and catalyzing surfaces embedded in the electrolyte.

In an alternative embodiment, a meander-shaped or comb-shaped or spiral-shaped hydrogen-developing body and a corresponding comb-shaped or meander-shaped or spiral-shaped catalyzer body are arranged in the vessel in an interdigitated or coaxially spiral configuration such that hydrogen-developing surfaces and catalyzing surfaces alternate with each other.

In a further embodiment, the catalyzer body or catalyzer bodies, respectively and the hydrogen-developing body or hydrogen-developing bodies, respectively, are arranged such that the opposing surfaces thereof are at a predetermined distance, preferably between 1 and 10 mm and more preferably between 3 and 5 mm. In a different configuration, the catalyzer body or catalyzer bodies, respectively and the hydrogen-developing body or hydrogen-developing bodies, respectively, are arranged such that the or each catalyzer body touches and covers a hydrogen-developing surface of the or each hydrogen-developing body, such that the corresponding hydrogen-developing surface is exposed to the electrolyte in the mesh openings or perforations of the attached catalyzer body.

The casing of the device, which is especially made of plastics, may comprise one or more frames or frame-like structures, on which the hydrogen developing and catalyzer bodies are each mounted in a liquid-tight manner. In a preferred embodiment the walls of the casing space form, at least approximately, a cuboid. As will be appreciated by the person skilled in the art, other shapes are feasible as well, like that of a cylinder.

In all of the above mentioned arrangements, hydrogen gas is developed along the respective surface regions formed from magnesium or a Mg alloy or the like, and this process runs in a more efficient way, and almost pure hydrogen gas can be obtained in an easier way than in prior art hydrogen generators, basically without additional purification from oxygen, which is being generated together with the hydrogen.

Still further, the proposed device preferably comprises means for accumulating hydrogen which has been developed on the surface of the body. In an embodiment, the means for accumulating hydrogen comprise actively driven exhaust means. In an alternative embodiment, the internal pressure which is typically developed in an exothermal hydrogen developing reactions is being used to and is basically sufficient to exhaust the hydrogen from the reactor vessel.

In a still further embodiment hydrogen storing means are connected directly to the means of accumulating hydrogen, without means for purifying the gas developed by the arrangement. Correspondingly, under process aspects it is proposed that the hydrogen developed on the surface of the body or bodies is being accumulated without external purification and/or at least part of the thermal energy produced by the arrangement is used for exhausting the hydrogen into hydrogen storing means.

In a further embodiment of the process, at least part of internal pressure developed in the vessel is used for outputting pressurized hydrogen, to drive a hydrogen-driven machine or to press hydrogen into a fuel cell and/or for outputting pressurized steam, to drive a steam machine. In a corresponding embodiment of a power supply system, the steam outlet is, via steam connection control means, selectively connected to a steam machine and the hydrogen outlet is, via hydrogen connection control means, selectively connected to hydrogen storing means and/or a fuel cell and/or hydrogen driven machine.

Further aspects and effects of the invention become clear from the more detailed explanation of embodiments on the basis of the attached drawings, of which

Figures 1 and 1A are illustrations of a first embodiment of the catalyzer body according to the invention,

Figures 2 and 2A are illustrations of a second embodiment of the catalyzer body according to the invention,

Figures 3A and 3B are illustrations of the mutual arrangement of hydrogen developing bodies and catalyzer bodies in a hydrogen generator device,

Fig. 4 is a block diagram of an arrangement for producing hydrogen according to an embodiment of the invention,

Figures 5A to 5C are schematic illustrations of exemplary embodiments of geometrical configurations of hydrogen developing bodies and catalyzer bodies in hydrogen generator devices,

Fig. 6 is a schematic perspective view of a reactor vessel for producing hydrogen and steam,

Fig. 7 is a sectional view of this reactor vessel, and

Fig. 8 is a perspective view of a system comprising a reactor vessel of Figs. 6 and 7.

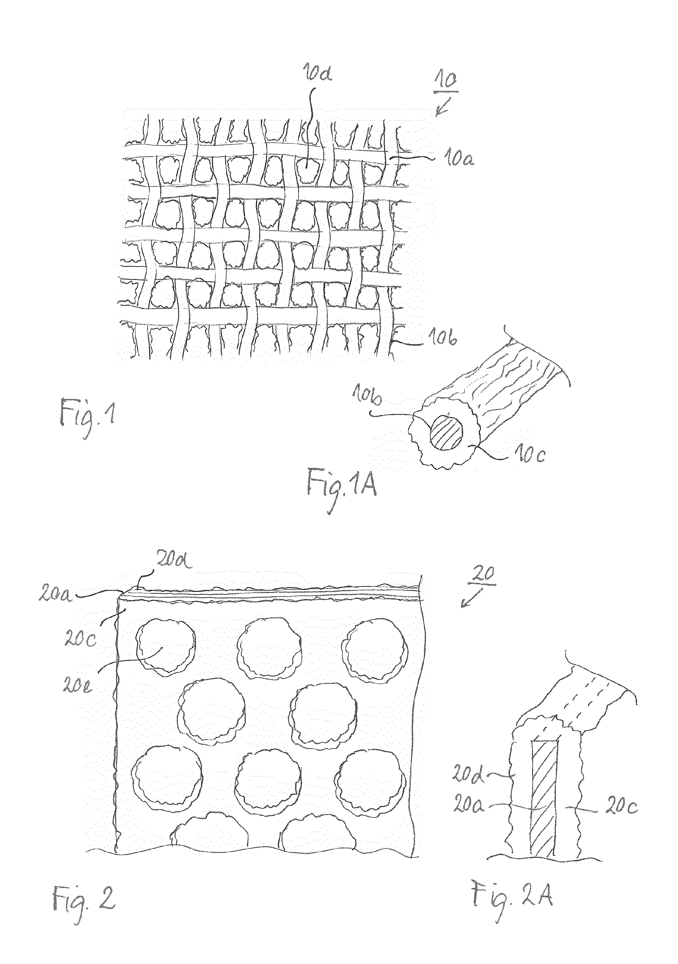

Fig. 1 shows a detail view of a mesh-type catalyzer sheet 10 which comprises a supporting structure 10a which consists of woven thin metal wires or polymer threads 10b, and a nano- or micro porous coating 10c (see Fig. 1A). The coating comprises at least one of iron, cobalt, nickel or a similar non-noble metal which is known as a catalyst in a hydrogen generating reaction, embedded into a matrix which is, dependent on the material of the supporting structure, e.g. made of a ceramic or cementitious material or a polymer adhesive. As illustrated in Fig. 1, the coating can, relative to the thickness of the supporting wires or threads, respectively, have such thickness that the woven structure is more or less hidden and just openings 10d of irregular shape remain.

Besides a woven supporting structure, perforated sheet structures or other types of supporting structures, which leave openings between the structural elements are within the scope of the invention. An exemplary embodiment for such structures is illustrated in Fig. 2 and 2A. These show a thin plate shaped catalyzer body 20 which is formed from a thin perforated core sheet 20a as supporting structure, both surfaces of which are coated with a porous non-noble metal catalyst coating 20c, 20d. As shown in Fig. 2, the perimeters of the perforations 20e are covered with the coating material as well, so that the original circular openings assume a somewhat irregular shape. Fig. 2A is a cross-sectional view of the catalyzer sheet 20, showing the structure thereof in more detail.

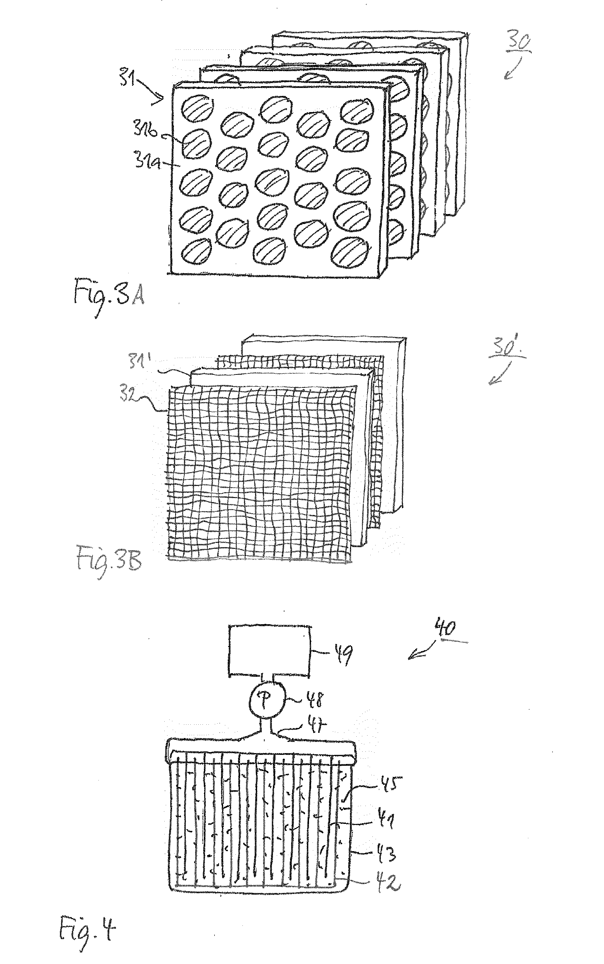

Fig. 3A shows a stack 30 of composite plates 31 which are comprised of a thicker magnesium core plate (hydrogen developing body) 31b and a thinner perforated steel sheet 31a with a ferrum group metal nanoporous coating (catalyzer body). The catalyzer body can be applied to both surfaces or only one surface of the respective hydrogen developing body, and the composite bodies 31 are arranged in parallel at a predetermined distance to each other. Correspondingly, one surface or both surfaces of the core magnesium plates are only partly exposed to an alkaline or saline hydrogen source which in operation of a corresponding device stands or flows between the composite plates.

An alternative arrangement 30' is shown in Fig. 3B wherein magnesium plates 31' and copper mesh sheets 32 with a microporous ferrum group metal coating alternate in a parallel arrangement with predetermined distances between all of the hydrogen developing plates and catalyzer plates. Herein, the whole surfaces of all hydrogen developing plates are fully exposed to an electrolyte (not shown) which in operation of a corresponding device exists in the spaces between the plates.

Fig. 4 schematically shows a hydrogen generator device 40. The device 40 comprises a first plurality of hydrogen-developing plates 41 and a second plurality of catalyzer plates 42, all arranged in parallel to each other in a container 43 which is filled with an aqueous electrolyte 45. The container 43 has an outlet 47 which is connected, through a pump 48, to a gas tank 49 for storing hydrogen which is generated at the surfaces of the hydrogen-generating plates 41.

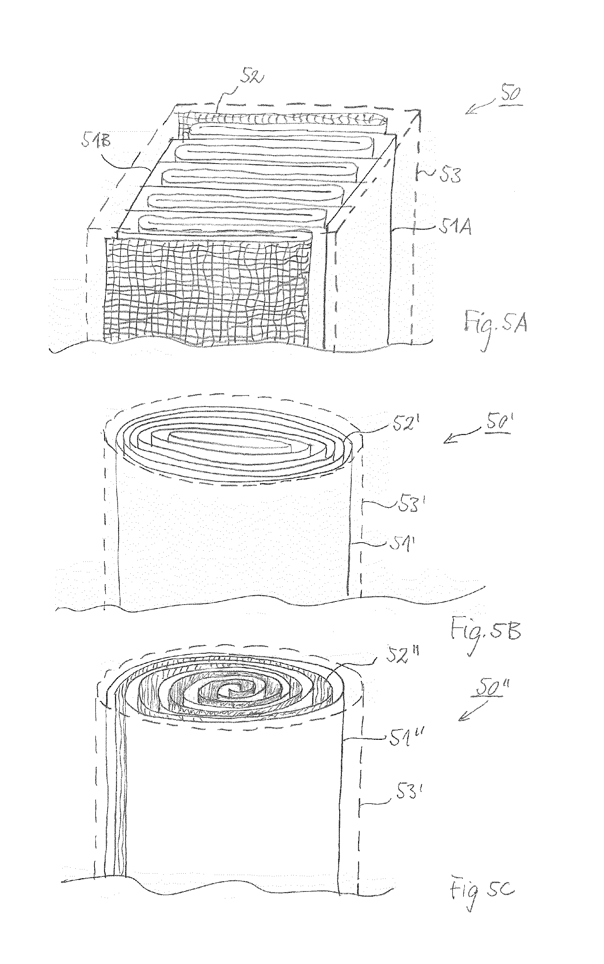

Fig. 5A schematically shows the basic structure of a further hydrogen generator device 50 which comprises two comb-like hydrogen developing bodies 51A, 51B arranged in an interdigitated manner opposite to each other and a meander-shaped catalyzer mesh 51B which is placed inbetween the "comb teeth" of the hydrogen developing bodies 51A, 51B, within a cuboid reaction vessel 53.

Fig. 5B shows another exemplary embodiment, wherein the hydrogen generator device 50' comprises a coaxially cylindrical alternating arrangement of hydrogen developing tubes 51' and catalyzer tubes 52' in a cylindrical vessel 53'. The mesh or grid like structure of the catalyzer tubes is not illustrated in this figure, for the sake of simplicity of the illustration. A similar arrangement is shown in Fig. 5C, wherein the basically cylindrical arrangement within the vessel 53' differs from that of Fig. 5B, in that a single hydrogen developing body 51" of spiral cross-sectional shape and, correspondingly, a single catalyzer body of spiral cross-sectional shape are immersed into an electrolyte (not shown) within the vessel 53'. In both geometrical configurations of Fig. 5B and 5C, the hydrogen developing surfaces of the cylinders 51' or the spiral 51", respectively, are kept distant from the surfaces of the catalyzer cylinders 52' or the catalyzing spiral 52" respectively, to make sure that the hydrogen source solution can stand or flow inbetween.

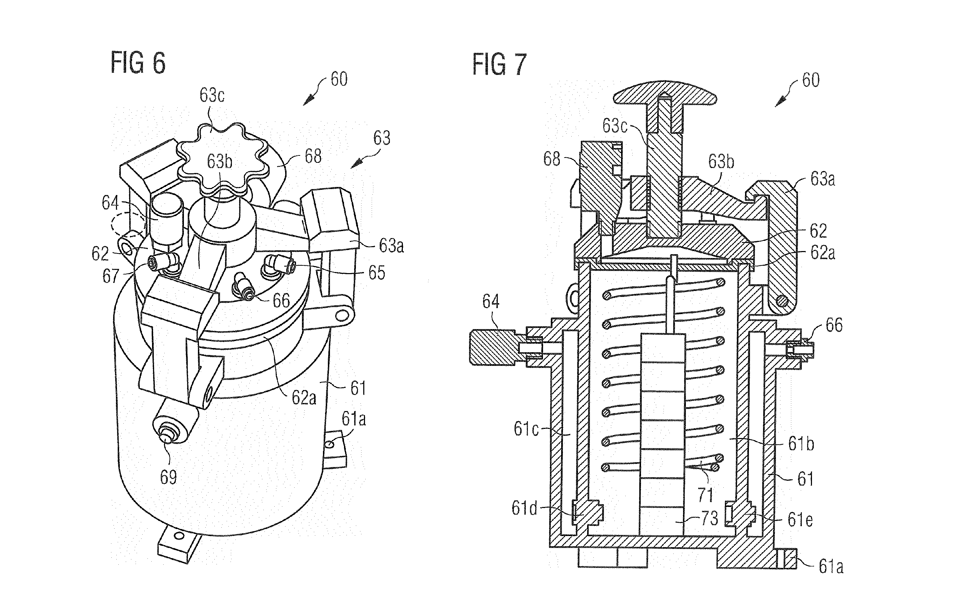

Fig. 6 and 7 show a perspective view or sectional view, respectively, of a hydrogen and steam generator 60, which may comprise hydrogen-developing bodies and catalyzer bodies as described above in detail but which can likewise contain a different hydrogen-developing arrangement. The reactor 60 comprises a thick-walled reactor vessel 61 having fastening means 61a for mounting it to a base, a vehicle body or similar. The reactor has a power locked lid or cover 62 comprising a seal 62a. To withstand a high pressure which may develop inside the vessel, robust locking means are provided at the cover, namely a three-armed clamp 63 comprising three pivotable clamping brackets 63a, a central clamping bridge 63b and a central locking screw 63c. For safety reasons, for limiting the pressure inside the vessel, in the cover 62 or at the wall of the vessel 61 a safety valve 64 is provided.

At the cover 62 (as shown in Fig. 6) or at the reactor vessel body 61 (as shown in Fig. 7), several inlets/outlets are provided, namely a water intake valve 65, hydrogen outlet valve 66 and steam outlet valve 67 (not all of which are shown in Fig. 7). A pressure gauge 68 is provided in the cover, both for safety and control purposes, and a control port 69 is provided at the side wall of the reactor vessel 61.

As can be seen in Fig. 7, the reactor vessel 61 is double-walled, thus defining an inner reactor compartment 61b and an outer reactor compartment 61c, which are connected to each other by an intake check valve 61d and an outlet check valve 61e. In the inner compartment 61b, a steam coil 71 and a fuel element (hydrogen-developing arrangement) 73 are contained. Whereas the inner compartment or chamber, respectively, 61b thus serves as hydrogen and steam developing chamber, the outer compartment or chamber, respectively, 61c is used for controlling the reaction by means of the automatic in/out check valves 61d, 61e.

The fuel element 73 being placed in the reactor, the inner compartment 61b is filled with water and locked, and the following exothermal reaction produces pure hydrogen and heats the inner chamber, thus producing steam in the steam coil 71.

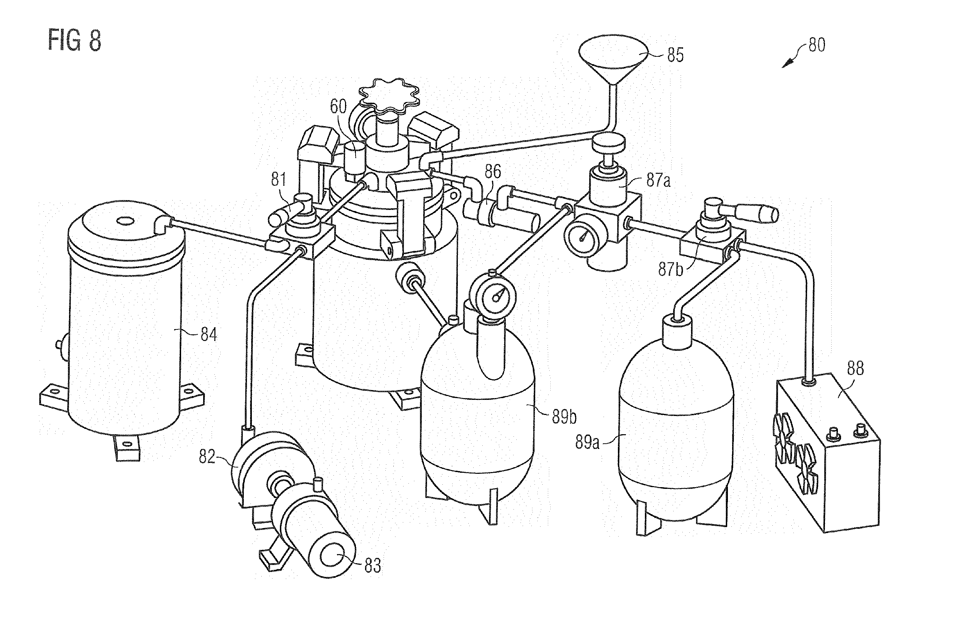

Fig. 8 schematically illustrates a power supply system 80, the core part of which is the reactor 60 described above. The steam outlet of the reactor 60 is, via a control valve 81, connectable to a steam turbine 82 driving a power generator 83 and/or to a condenser 84. The water inlet of the reactor 60 is connected to a water reservoir 85, which may contain and deliver sea water or waste water or, under certain provisions, even tap water to the reactor.

The hydrogen outlet of the reactor is, via a pneumatic machine 86 and to further control valves 87a, 87b, selectively connectable to a fuel cell 88 and a hydrogen tank 89a and/or control tank 89b. Depending on the hydrogen output and pressure delivered by the reactor, this arrangement can be controlled to deliver a maximum electrical power output by operating the pneumatic machine 86 and/or the fuel cell 88 and/or to store at least part of the produced hydrogen in a respective tank. The pneumatic machine 86 can be of the magnetic piston air cylinder type or another well-known type or being embodied by a second small turbine unit.

A system as shown in Fig. 8 can well be adapted to a large variety of applications and being scaled correspondingly, including stationary small or mid-sized power plants, land vehicle drives and boat or submarine drives.

The embodiments and aspects of the invention explained above are not determined to limit the scope of the invention, which is exclusively to be determined by the attached claims. Many modifications of the inventive concept are possible within the scope of the claims and, more specifically, arbitrary combinations of the several claim features are considered to be within the scope of the invention.

**Claims**

1. Catalyzer body of a hydrogen generator device, the catalyzer body comprising a mesh-type or perforated sheet-type supporting structure at least partly provided with a large surface area coating with catalytic activity towards hydrogen evolution reaction.

2. Catalyzer body of claim 1, wherein the support structure comprises a metal mesh or perforated metal sheet, preferably made from steel or copper, or a plastic mesh or perforated plastic sheet made from a polymer material, the mesh, or sheet, respectively, comprising a thickness between 20 $\mu$m and 2 mm, preferably between 100 $\mu$m and 1mm and more preferably between 200 $\mu$m and 750 $\mu$m, and a mesh or perforation size respectively, between 200 $\mu$m and 20 mm, preferably between 500 $\mu$m and 10 mm and more preferably between 1 and 5 mm.

3. Catalyzer body of claim 1 or 2, wherein the coating comprises at least one of nickel, cobalt, molybdenum, manganese and iron and/or alloy or a nitride thereof or carbon, preferably in a ceramic or polymeric binder/adhesive matrix.

4. Catalyzer body of one of the preceding claims, wherein the coating comprises a nano- or microporous surface having a surface roughness in the range between 200 nm and 1mm, preferably between 500 nm and 200 $\mu$m and more preferably between 2 and 5 $\mu$m.

5. Catalyzer body of one of the preceding claims, comprising an overall flat, cylindrical or spiral plate shape.

6. Hydrogen generator device comprising, in a vessel having a gas outlet, at least one hydrogen-developing body which is made from or at least comprises portions made from magnesium, zinc or aluminum or an alloy thereof, preferably a plurality of such hydrogen-developing bodies,
a catalyzer body of one of the preceding claims, and
an alkaline or saline aqueous electrolyte.

7. Hydrogen generator device of claim 6, wherein a first plurality of plate-shaped or cylindrical hydrogen-developing bodies and a second plurality of correspondingly plate-shaped or cylindrical catalyzer bodies is arranged in the vessel in an alternating configuration of hydrogen-developing and catalyzing surfaces embedded in the electrolyte.

8. Hydrogen generator device of one of claims 1 to 6, wherein a meander-shaped or comb-shaped or spiral-shaped hydrogen-developing body and a corresponding comb-shaped or meander-shaped or spiral-shaped catalyzer body are arranged in the vessel in an interdigitated or coaxially spiral configuration such that hydrogen-developing surfaces and catalyzing surfaces alternate with each other.

9. Hydrogen generator device of claim 7 or 8, wherein the catalyzer body or catalyzer bodies, respectively and the hydrogen-developing body or hydrogen-developing bodies, respectively, are arranged such that the opposing surfaces thereof are at a predetermined distance, preferably between 1 and 10 mm and more preferably between 3 and 5 mm.

10. Hydrogen generator device of claim 7 or 8, wherein the catalyzer body or catalyzer bodies, respectively and the hydrogen-developing body or hydrogen-developing bodies, respectively, are arranged such that the or each catalyzer body touches and covers a hydrogen-developing surface of the or each hydrogen-developing body, such that the corresponding hydrogen-developing surface is exposed to the electrolyte in the mesh openings or perforations of the catalyzer body.

11. Hydrogen generator device of claims 6 to 10, comprising electrolyte supply means for supplying fresh electrolyte into the vessel and/or reaction product discharge means for discharging particulate hydrogen generation reaction product from the vessel.

12. Hydrogen generator device according to one of claims 6 to 11, for additionally producing steam, wherein the hydrogen-developing body or hydrogen-developing bodies and catalyzer body or catalyzer bodies is/are arranged in a hermetically closed reactor vessel, the reactor vessel comprising a water inlet, a hydrogen outlet, and a steam outlet and control means for controlling the intake of the water or electrolyte and the output of steam produced in the reactor body in an exothermal reaction at the electrolyte-contacting surfaces of the hydrogen-developing body or bodies.

13. Hydrogen generator device according to claim 12, the control means comprising start/stop means for starting or stopping the hydrogen production and steam generation.

**14.** Power supply system comprising a hydrogen generator device of claim 12 or 13, wherein the steam outlet is, via steam connection control means, selectively connected to a steam machine and the hydrogen outlet is, via hydrogen connection control means, selectively connected to hydrogen storing means and/or a fuel cell and/or a hydrogen driven machine.

Fig.1

Fig.1A

Fig. 2

Fig. 2A

Fig.3A

Fig.3B

Fig.4

Fig.5A

Fig.5B

Fig 5C

FIG 7

FIG 6

FIG 8

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 031 948 A1 (ASAHI CHEMICAL IND [JP]) 15 July 1981 (1981-07-15) | 1-5 | INV. H01M8/06 |
| Y | * page 17, line 8 - page 18, line 4; examples 1-6 * | 6-14 | C01B3/08 B01J23/28 B01J23/34 |
| X | WO 2008/024089 A2 (INTELLIGENT ENERGY INC [US]; CHELLAPPA ANAND [US]; POWELL MICHAEL R [U) 28 February 2008 (2008-02-28) | 1-5 | B01J23/745 B01J23/75 B01J23/755 |
| Y | * claims 10, 11 * | 6-14 | B01J27/20 B01J27/24 |
| X | WO 2006/113680 A2 (INTELLIGENT ENERGY INC [US]; CHELLAPPA ANAND S [US]; VENCIL THOMAS R []) 26 October 2006 (2006-10-26) | 1-5 | B01J35/04 B01J35/06 |
| Y | * claims 28, 29, 36 * | 6-14 | |
| Y,D | US 4 436 793 A (ADLHART OTTO J [US]) 13 March 1984 (1984-03-13) | 6-14 | |
| A | * column 5, line 21 - line 61; figure 6 * | 1-5 | |
| Y,D | US 4 017 414 A (BLACK STANLEY A ET AL) 12 April 1977 (1977-04-12) | 6-14 | TECHNICAL FIELDS SEARCHED (IPC) |
| A | * the whole document * | 1-5 | H01M C01B B01J |
| Y,D | US 3 256 504 A (MORRIS FIDELMAN) 14 June 1966 (1966-06-14) | 6-14 | |
| A | * claims 1-4 * | 1-5 | |
| Y | US 4 264 362 A (SERGEV SERGIUS S ET AL) 28 April 1981 (1981-04-28) | 6-14 | |
| A | * the whole document * | 1-5 | |

The present search report has been drawn up for all claims

| Place of search | Date of completion of the search | Examiner |
|---|---|---|
| The Hague | 20 January 2014 | Engelen, Karen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 17 8176

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2014

| Patent document cited in search report | | Publication date | Patent family member(s) | | Publication date |
|---|---|---|---|---|---|
| EP 0031948 | A1 | 15-07-1981 | AU | 541149 B2 | 20-12-1984 |
| | | | AU | 6580780 A | 02-07-1981 |
| | | | BR | 8008538 A | 21-07-1981 |
| | | | CA | 1188254 A1 | 04-06-1985 |
| | | | DE | 3071799 D1 | 20-11-1986 |
| | | | EP | 0031948 A1 | 15-07-1981 |
| | | | FI | 804023 A | 27-06-1981 |
| | | | NO | 803917 A | 29-06-1981 |
| | | | RU | 2045583 C1 | 10-10-1995 |
| | | | US | 4496453 A | 29-01-1985 |
| WO 2008024089 | A2 | 28-02-2008 | EP | 1917329 A2 | 07-05-2008 |
| | | | JP | 4762314 B2 | 31-08-2011 |
| | | | JP | 2009507755 A | 26-02-2009 |
| | | | US | 2005281735 A1 | 22-12-2005 |
| | | | WO | 2008024089 A2 | 28-02-2008 |
| WO 2006113680 | A2 | 26-10-2006 | EP | 1877335 A2 | 16-01-2008 |
| | | | EP | 2578532 A1 | 10-04-2013 |
| | | | JP | 4890538 B2 | 07-03-2012 |
| | | | JP | 2008536796 A | 11-09-2008 |
| | | | JP | 2011168488 A | 01-09-2011 |
| | | | KR | 20080012876 A | 12-02-2008 |
| | | | US | 2006233700 A1 | 19-10-2006 |
| | | | WO | 2006113680 A2 | 26-10-2006 |
| US 4436793 | A | 13-03-1984 | NONE | | |
| US 4017414 | A | 12-04-1977 | NONE | | |
| US 3256504 | A | 14-06-1966 | NONE | | |
| US 4264362 | A | 28-04-1981 | NONE | | |

EPO FORM P0459

## REFERENCES CITED IN THE DESCRIPTION

**Patent documents cited in the description**

- US 4822698 A
- US 6372371 B1
- US 5405717 A
- US 5225291 A
- US 5427871 A
- US 4601961 A
- US 5288564 A
- US 6656628 B2
- US 5004654 A
- US 5360680 A
- US 5376471 A

- US 5415949 A
- US 5316632 A
- US 6127061 A
- US 3256504 A
- US 3892653 A
- US 4436793 A
- US 20080268306 A
- US 4017414 A
- US 4264362 A
- JP 2003221201 A
- US 20040018145 A